# EUROPEAN PATENT APPLICATION

(11) **EP 4 685 083 A1**
(43) Date of publication of application: **28.01.2026**
(21) Application number: 24190750.0
(22) Date of filing: 24.07.2024
(51) Int. Cl.: B65G 1/04

(54) **MOUNT**

(71) Applicant: AutoStore Technology AS, 5578 Nedre Vats (NO)
(72) Inventor: Austrheim, Trond, 5578 Nedre Vats (NO); Myrbakken, Joakim A, 5578 Nedre Vats (NO); Gjerdevik, Øystein, 5578 Nedre Vats (NO); Fitje, Martin, 5578 Nedre Vats (NO); Lie, Bjørnar Berge, 5578 Nedre Vats (NO)
(74) Representative: Kilburn & Strode LLP

(57) **Abstract**

A mount for supporting a track sensor of a vehicle for operating on the track of an automated storage and retrieval system. The mount configured to displace when force is applied to said mount.

## Description

### TECHNICAL FIELD

The disclosure relates to a mount. More particularly, it relates to a mount for supporting a track sensor of a vehicle for operating on the track of an automated storage and retrieval system, a sensor module comprising a sensor and such a mount, a vehicle comprising such a mount and a sensor as well as an automated storage and retrieval system comprising such a vehicle.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of travelling at high speeds in X and Y directions along the rails. In addition to the robotic container-handling vehicles, a service vehicle for carrying an operative may be provided to travel in X and Y directions along the rails. The movement of the service vehicle is typically controlled locally by the operative.

The service vehicle may comprise the same or similar track position sensors to the robotic container-handling vehicles to determine the position of the vehicle on the rail system. The service vehicle may be stopped partially across a grid cell in order to carry out service or inspection of the grid. The service vehicle and its location sensors may need to be reset.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows an isometric view of an example mount with the senor in an undisplaced position;
Fig. 5b shows a side view of the mount and sensor of Fig. 5a;
Fig. 6a shows an isometric view of the mount and sensor of Fig. 5a with the sensor in a displaced position;
Fig. 6b shows a side view of the mount and sensor of Fig. 6a;
Fig. 7a shows an isometric view of a further example mount and sensor with the sensor in an undisplaced position;
Fig. 7b shows an exploded view of the mount and sensor of Fig. 7a

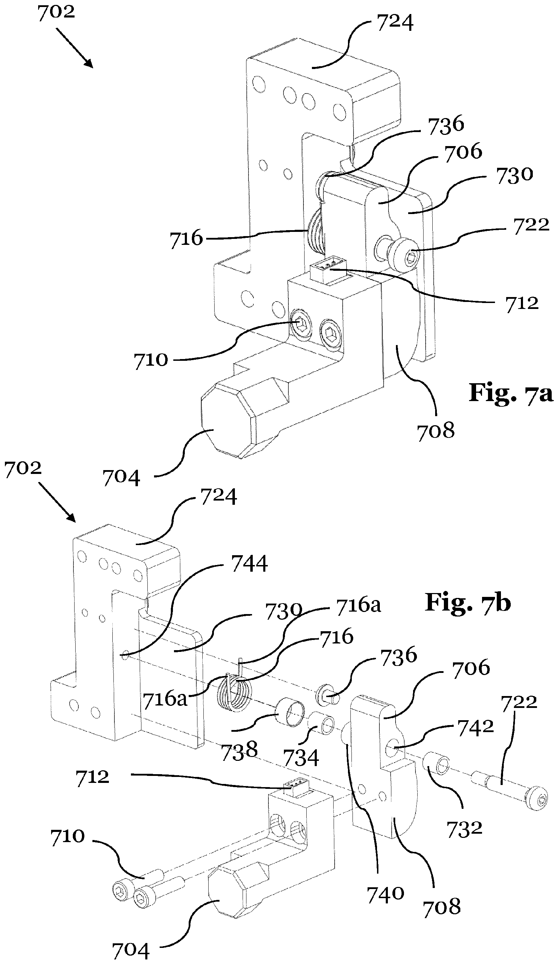

Fig. 7b shows a side view of the mount and sensor of Fig. 7a;

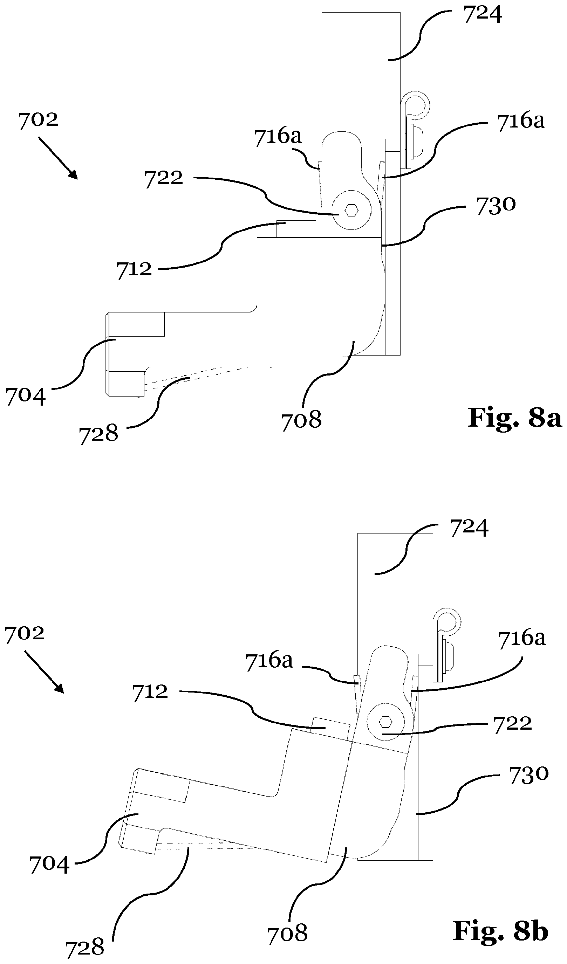

Fig. 8a shows a side view of the mount and sensor of Fig. 7a with the sensor in an undisplaced position;
Fig. 8b shows a side view of the mount and sensor of Fig. 7a with the sensor in an displaced position;

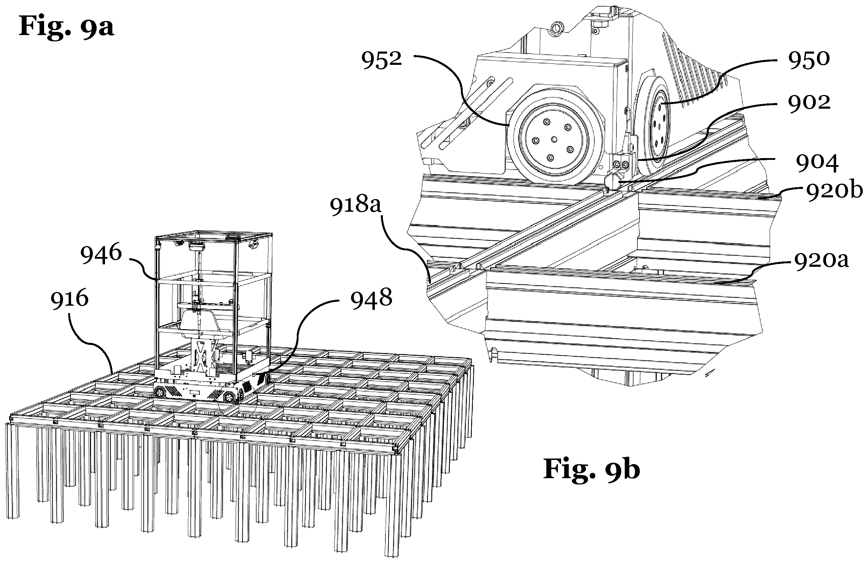

Fig. 9a shows a vehicle on a rail of an automated storage and retrieval system;
Fig. 9b shows an enlarged view of the vehicle of Fig. 9a;

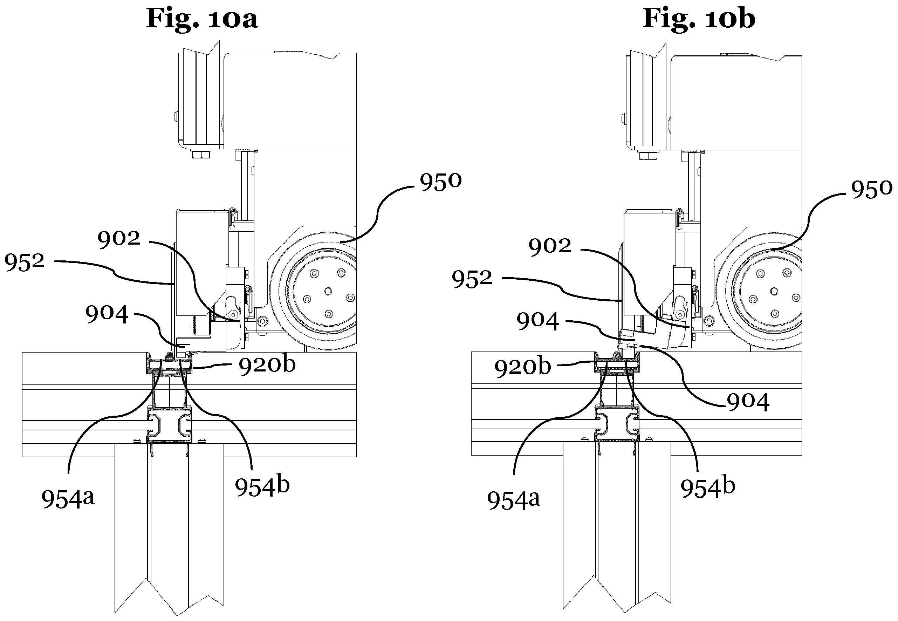

Fig. 10a shows the vehicle of Fig. 9a with a track sensor positioned in a rail;
Fig. 10b shows the vehicle of Fig. 10a with the track sensor displaced by the rail;

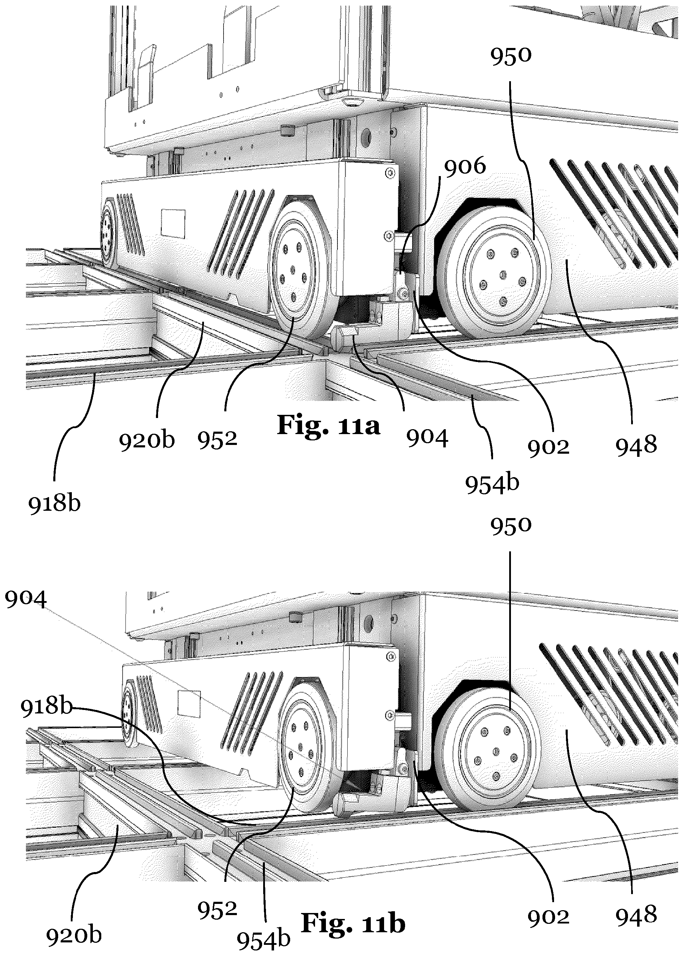

Fig. 11a shows a further view of the vehicle of Fig. 91 with the track sensor position in a rail;
Fig. 11b shows a view of the vehicle of Fig. 10a with the track sensor displaced by the rail;

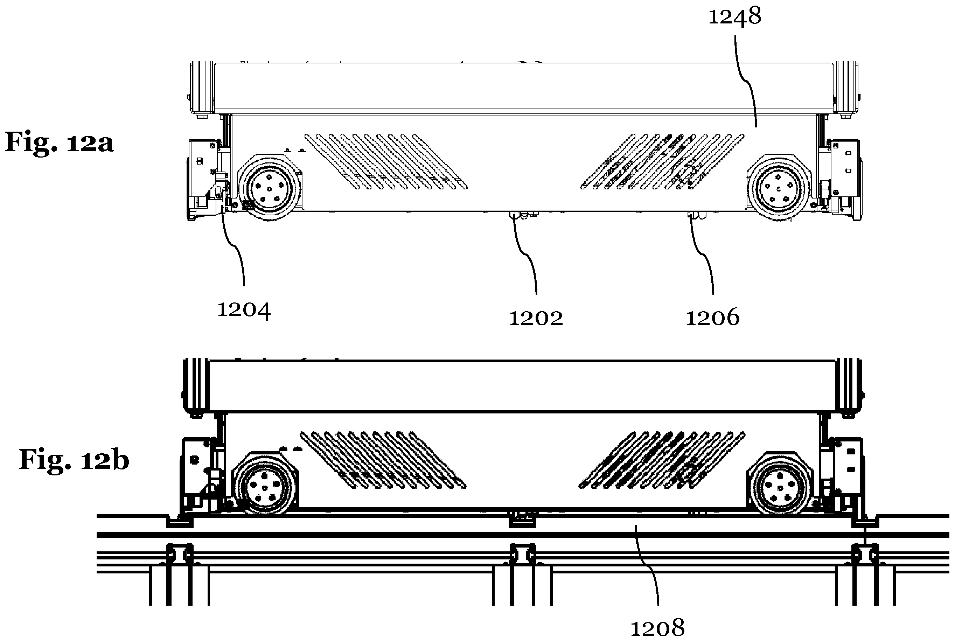

Fig. 12a shows a side view of the vehicle of Fig. 10a; and
Fig. 12b shows a side view of the vehicle of Fig. 10b on a rail.

### DETAILED DESCRIPTION

In overview, the disclosure relates to a mount which is suitable for supporting a track sensor of a vehicle which can be operated on the track of an automated storage and retrieval system. The mount is configured to displace when force is applied to said mount either directly or indirectly, for example, through force applied to a sensor supported by the mount. When the mount is coupled to and supported by a sensor, if the sensor or mount should contact or impact an obstacle such as portion of track or rail of an automated storage and retrieval system, the sensor can move such that damage to the sensor is reduced or avoided. The mount may be provided with biasing means, such as in the force of a spring, to bias the mount and associated sensor back to its operating position when the obstacle is removed or passes.

### Automated storage and retrieval system overview

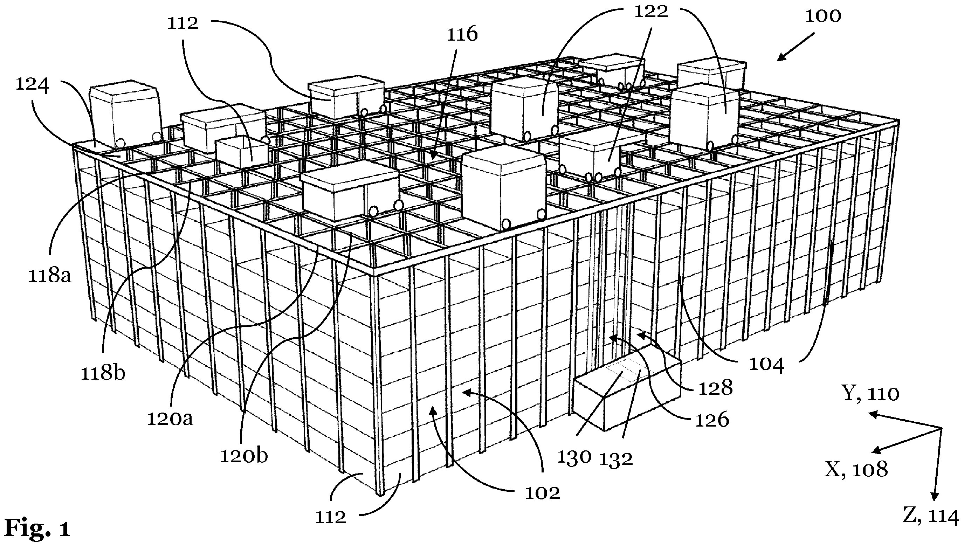

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

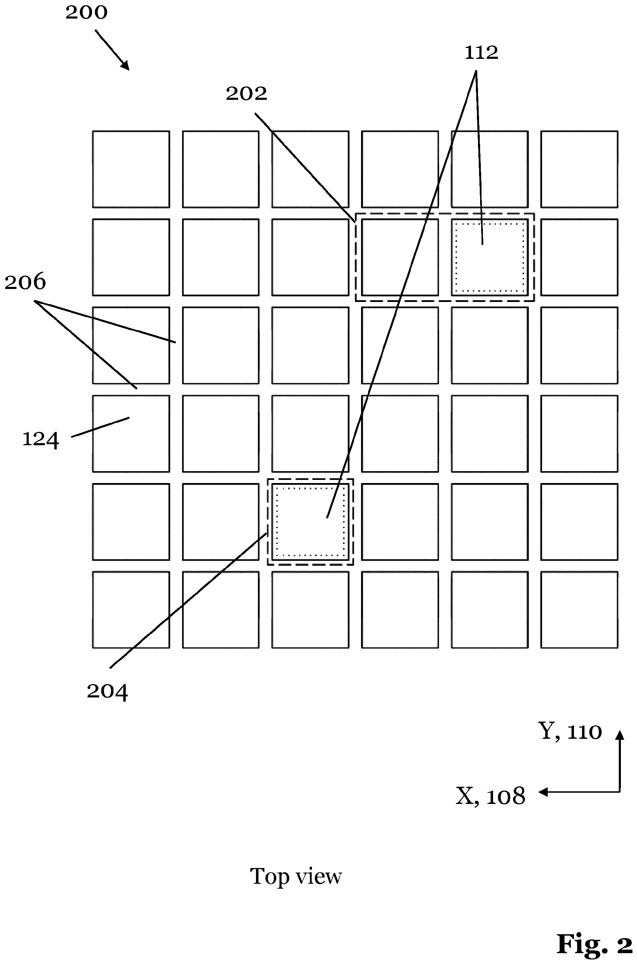

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

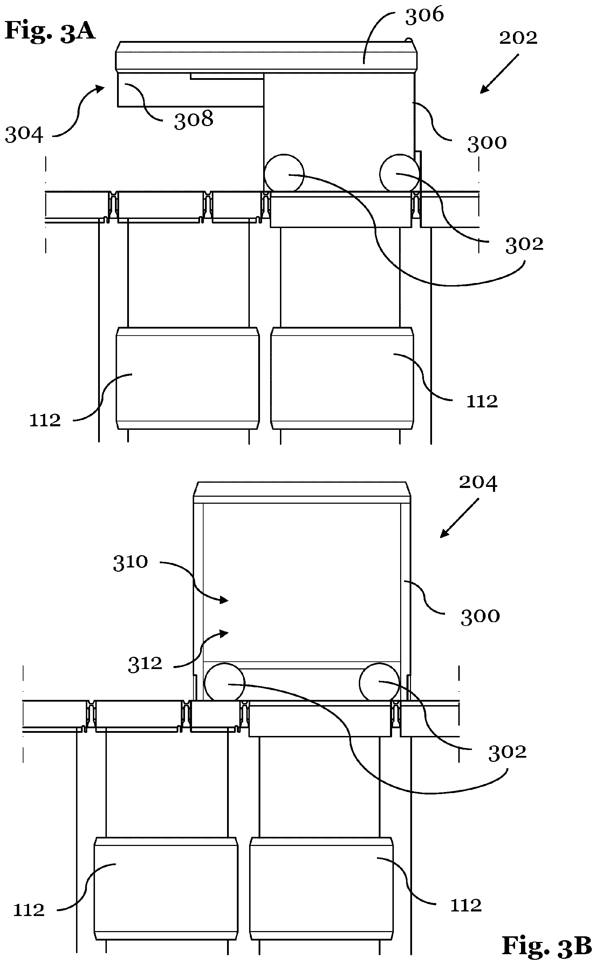

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

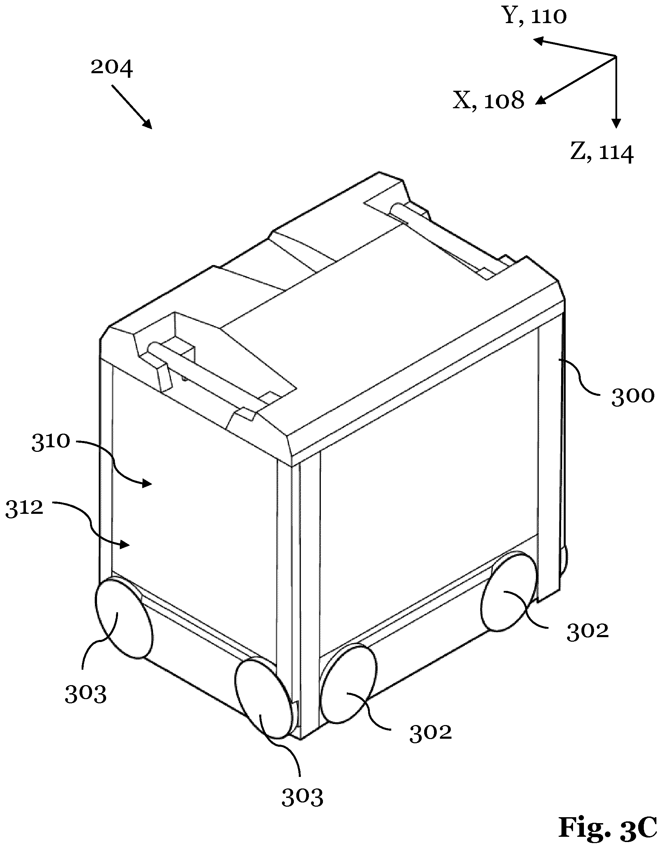

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

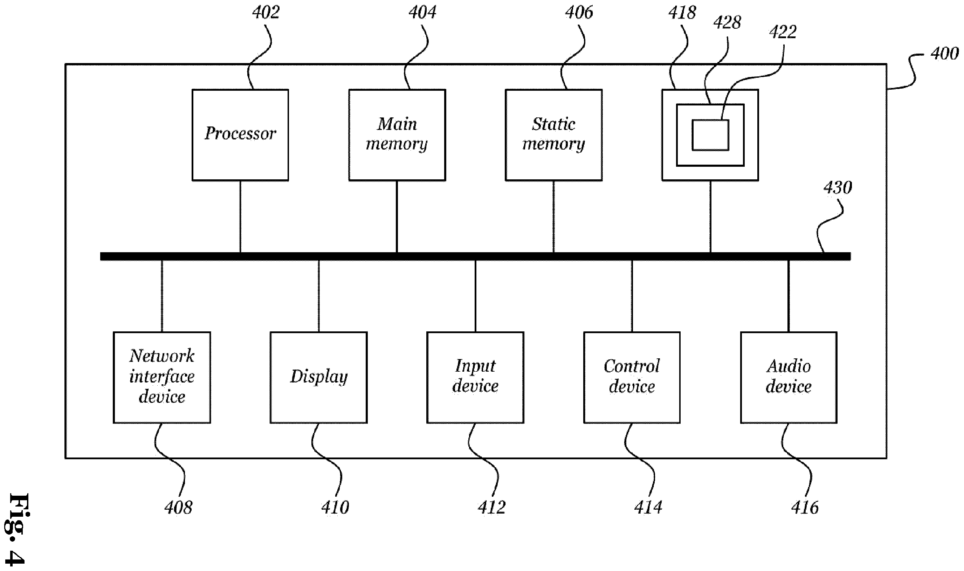

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Mount

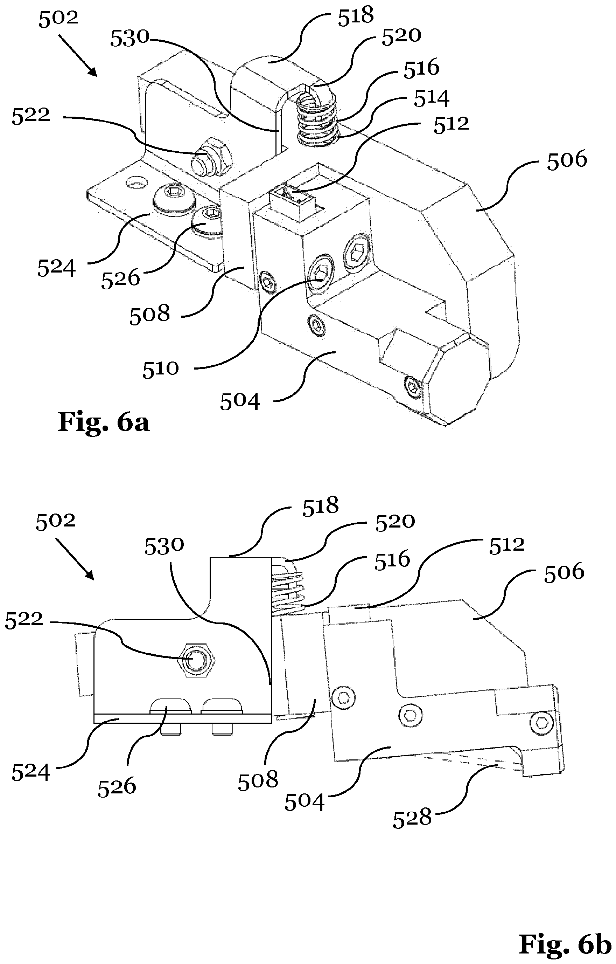

Fig. 6a shows an example mount generally at 502 for a sensor 504. The sensor 504 may be a track position sensor used to determine the position of a vehicle on a track of an automated storage and retrieval system. The combination of the mount and sensor maybe described as sensor module. In the example, the mount 502 has electrical connector 512 for connecting the sensor 504 via a cable to a controller or the like.

The mount 502 comprises a main support body 506 with two spaced apart major parallel faces vertically oriented. There is a generally rectangular body 508 extending from around a mid-point of one major face of the main support body 506. The main support body 506 and the rectangular body 508 may be formed integrally with one another, for example, from machined material such as aluminium.

In the example, a track sensor 504 sits against and is fixedly attached using bolts 510 to one major face of rectangular body 508. Other means to attach the sensor 504 are envisaged such as clips and other mechanical means.

The main support body 506 is pivotally attached to a vertical portion of a flange plate 524 using pivot bolt 522 which extends through the major faces of the main flat body 506. The flange plate 524 is formed of plate material bent to form the vertical portion abutting a major face of the main flat support body 506 and a horizontal part which may be provided with bolts 526 or other fasteners for attaching the mount 502 to a vehicle.

The flange plate 524 includes an extension 518 at the upper most edge of the vertical part which is bent to sit over a top side edge of the main support body 506. The extension 518 includes a side extension 520 which is joined perpendicular to the extension 518 and is bent downwards towards the top edge of the main support body 506 to sit within the coils of a coil compression spring 516 which is located within a hole 514 formed on the top side edge of the main flat support body 506. The side extension 520 retains the coidl spring in position.

In the example, the coil spring 516 located generally in line with the rectangular body 508. The coil spring 516 serves to bias the main support body 506 about the pivot bolt 522 so that the main support body 506 and the sensor 504 are in a generally horizontal orientation. When the main support body 506 is biased in a generally horizontal orientation, a major face of the rectangular body 508 abuts against the side edges 530 of the flange plate 524 with the side edges serving as a stop to limit movement of the main support body.

The main support body 506 may be formed with larger and thus with greater mass towards its front most end than its mass rearwards of the pivot bolt 522 such that the sensor which is coupled to the main support body 506 will rotate back to its operational, typically horizontal position, under the force of gravity.

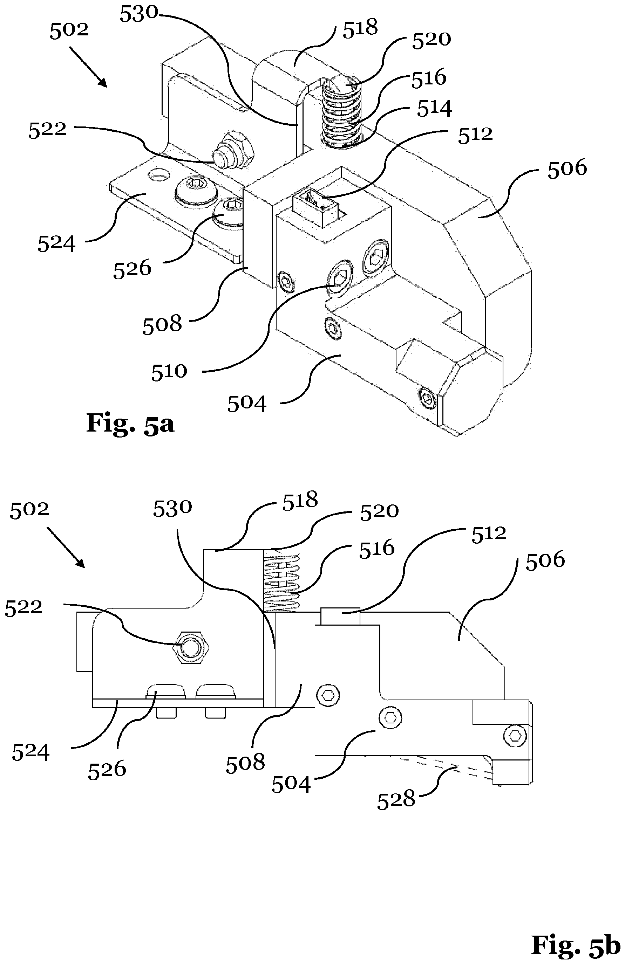

Fig. 5b shows a side view of the mount 502 and sensor 504. Features described in relation to Fig. 5a will not be described again. The sensor 504 may be an optical sensor. The dashed lines 528 extending at a diagonal from the underside of the sensor 504 to the front end of the sensor represent schematically, the light beam of sensor 504. In operation, the light beam is broken as it passes junctions on the rails of the track in order to track its movement and identify the track position.

Fig. 6a shows the mount 502 of Fig. 5a with the sensor 504 in a displaced position. Features described in relation to Fig. 5a will not be described again. When the sensor 504 is displaced, for example due to force being applied to the sensor from contact with a rail of the track or other obstacle including undulations on the rails, the main support body 506 is caused to pivot about support bolt 522. Displacement of the sensor 504 may be caused by force being applied directly to the sensor 504 from an obstruction or the like or indirectly, for example, force is applied to the main support body 506. As the sensor 504 is displaced, the coil sprung 516 is compressed such that when upward force to the sensor 504 is removed, the main support body 506 is biased by spring 514 to return the sensor 504 to its operational alignment, which in the example is horizontal. Although in the example the displacement is caused by pivoting of the main support body 506, it is envisages that linear displacement could also be achieved, for example, with a sprung slider.

Figure 6b. shows a side view of the mount and sensor as shown in Fig. 6a. The degree of rotation of the main support body 506 about the pivot bolt 522 is typically less than 20 degrees. This is sufficient to allow the sensor to be displaced at its lowermost end above a track on which it is travelling.

Fig. 7a shows a further example mount generally at 702 for a sensor 704. The sensor 704 may be the same as the sensor described in relation to Figs. 5a to 6b, namely a track position sensor. In the example the sensor 704 has electrical connector 712 for connecting the sensor 704 via a cable to a controller or the like.

The mount 702 has a main support body 706 with its major faces generally vertically oriented. There is an abutment 708 extending from the side of the main flat support body 706. The main support body 706 and the abutment 708 may be formed integrally with one another, for example, from machined material such as aluminium.

In the example, the track sensor 704 sits against and is attached using bolts 710 to one major face of the main support body 706.

The main support body 706 is pivotally attached to side support 724 using pivot bolt 722 which extends through the side faces of the main body 706. The side support 724 is form as a generally vertical arranged S-shaped part with a side extension plate 730. The side support 724 is provided with holes which may be used to attach the mount 702 to a vehicle using mechanical means such as bolts or the like.

In the example, a torsion spring 716 is located on its side between a side of the main support body 706 and the side support 724. The spring 716 serves to bias the main support body 706 about the pivot bolt 722 so that the main support body 706 is generally vertically oriented and the sensor 704 which is attached perpendicularly thereto is in a generally horizontal orientation. When the main support body 506 is biased, a rear face of the support body 706 abuts against a face of the side extension plate 730 of the support 724 to serve as a stop to limit movement of the main support body 506.

Fig. 7b shows an exploded view of the mount 702 of Fig. 7a. The main support body 706 may be formed with a narrower section at its top end to provide for a spacing between the main support body 706 and the side extension plate 730 above the pivot provided by the pivot bolt 722 to allow and limit the degree of rotation of the main support body 706.

The torsion spring 716 has two free ends 716a, 716b. One free end 716b abuts the side extension plate 730. The other free end 716a engages with a spring bolt 736 in a side of the main support body 706. As the main support body 706 rotates, the bolt 736 engages with the free end 716a of the spring and biases the spring and put it under torsion.

A first pivot sleeve 734 sits within a tubular extension 740 from the main support body 706. Second pivot sleeve 732 is located in aperture 742 on the opposing side of the main support body 706. The pivot bolt 722 is arranged horizontally and is located within the first and second pivot sleeves 734. A tubular spring support 738 sits over first pivot sleeve 744 and the spring 716 sits over the spring support 738.

Fig. 8a shows the mount 702 of Fig. 7a with the sensor 704 in a nondisplaced position. Features discussed in relation to Figs. 7a and 7b will not be described again. As with the sensor described in relation to Figs. 5b and 6b, the dashed lines 728 represent schematically, the light beam of the sensor 704 may be used to measure the track position.

Fig. 8b shows the mount 802 of Fig. 7a with the sensor 704 in a displaced position. When the sensor 704 is displaced for example due to a force being applied to the sensor 704 either directly or indirectly from contact with a rail of a track or the like, the main support body 706 pivots about support bolt 722. As this happens, the spring 716 is biased such that when upward force to the sensor 704 is removed, the main support body 506 is biased by spring 714 via spring bolt 736 to return the sensor 704 to its horizontal operational alignment. The degree of rotation of the main flat support body 706 is typically less than 20 degrees to allow the sensor 704 to be displaced at its lowermost end above a track on which it is travelling.

Fig. 9a shows a vehicle 946 on the track 916 of an automated storage and retrieval system. In the example, the vehicle is a service vehicle 946 with a safety cage for an operator. The service vehicle 946 has a drive unit 948 comprising drive wheels which can move the vehicle 946 on the rails of the track 916.

Fig. 9b shows an enlarged view of the service vehicle 946 of Fig. 9a. The drive unit operates in a similar manner to the Robot 204 described with reference to Fig. 3c. A set of two wheels is provided on each side of the vehicle. Sets of wheels on opposite sides of the vehicle permit movement of the vehicle in one of the X and Y directions, the sets of wheels on the other orthogonal sides permitting movement in the other of the X and Y directions, in both cases along the respective rails or tracks 918a, 920a, 920b. The sets of wheels can be raised or lowered to permit selective engagement of the rails for movement in the desired direction.

As can be seen in Fig 9b, the sensor 904 supported by mount 902 is located within rail 918a, 920b in an undisplaced position. The mount 902, which in the example is the type as described in relation not Figs. 7a to 8b, and corresponding sensor 902 is supported to be lifted with its associated set of wheels. The service vehicle has a human operator to move control its movement on the track. If the vehicle is stopped when the wheels are not fully aligned with their corresponding rails, there is a risk that when a subsequent movement operation is made, a set of wheels will be inadvertently lowered along with its associated mount. There is then a risk that the attached sensor will engage the rail which could cause damage thereto.

In Fig. 10a, sensor 904 is shown located in rail 954b which is the same rail in which wheel 952 is located. The orthogonal wheel sets of which only wheel 950 is shown, is in a raised position.

Fig. 10b shows the sensor 904 in a displaced position. This could be due to an engagement with the divide between rail 954a and 954b. The mount 902 allows the sensor 904 to be displaced and avoid or reduce the risk of damage to the sensor.

Fig. 11a shows another view of the vehicle with sensor 904 in position in tracker 954b. Here the sensor is in an undisplaced position. As the vehicle is driven by wheels 952, the sensor 904 can serve to be triggered by the rail junctions.

Fig. 11b shows the sensor 904 in a displaced position as it engages rail 918b when the associated set of wheels 952 have been lowered onto the rail 918b. It can be seen that the sensor 904 is displaced by rotation of the main support body 906 to which the sensor 904 is attached of the mount 902. Advantageously, in this way, damage to the sensor 904 can be avoided or reduced.

The mount and associated sensors describes in relation to Figs. 5a to 6b similarly serve to avoid or reduce damage to sensors as a vehicle travels on the track.

Fig 12a shows a side view of the drive unit 1248 of a vehicle such as that shown in Fig. 9a. In this view, a mount 1204 such as that described in relation to Figs. 7a to 8b, is shown for supporting a track sensor. Also visible are the locations of mounts 1202 and 1206 such as those described in relation to Figs 5a to 6b for supporting associated sensors in positions between the ends of the drove unit 1248.

Fig. 12b shows the drive unit 1248 of Fig. 12a on a track 1208 to show the operational positioning of the sensors on the rails of the track 1208.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A mount for supporting a track sensor of a vehicle for operating on the track of an automated storage and retrieval system, the mount configured to displace when force is applied to said mount.

2. A mount according to claim 1, wherein at least a portion of the mount is configured to rotate about a generally horizontal pivot axis when an upward vertical force is applied.

3. A mount according to any of the preceding claims, wherein the mount includes biasing means to bias the track sensor into an operating position.

4. A mount according to claim 5, wherein the biasing means includes a spring.

5. A mount according to any of the preceding claims, wherein the mount comprises a main support body for supporting said sensor.

6. A mount according to any of the preceding claims, wherein the main support has a greater mass towards one end.

7. A mount according to any of the preceding claims, wherein a stop is provided to limit movement of the main support body.

8. A sensor module comprising a mount according to any of the preceding claims and a sensor attached thereto.

9. A sensor module according to claim 8, wherein the sensor is a track position sensor.

10. A sensor module according to claim 8 or 9, wherein the sensor is an optical sensor.

11. A vehicle for operating on the track of an automated storage and retrieval system, the vehicle comprising a mount according to any of claims 1 to 7 and/or a sensor module according to any of claims 8 to 10.

12. A vehicle according to claim 11, wherein the sensor and mount are associated with a set of wheels of the vehicle.

13. A vehicle according to claim 11 or 12, wherein the mount has a pivot axis oriented generally orthogonal to wheel axes of the associated set of wheels.

14. A vehicle according to any of claims 11 to 13, wherein the vehicle includes a plurality of track position sensors and associated mounts.

15. An automated storage and retrieval system comprising a storage grid and a vehicle of any of claims 11 to 14.
